Europäisches Patentamt

European Patent Office

Office européen des brevets

(19)

(11) Numéro de publication: **0 597 942 B1**

## FASCICULE DE BREVET EUROPEEN

(12)

(45) Date de publication de fascicule du brevet: **15.03.95**　(51) Int. Cl.⁶: **B60C 23/04**

(21) Numéro de dépôt: **92916489.5**

(22) Date de dépôt: **20.07.92**

(86) Numéro de dépôt internationale :
**PCT/FR92/00710**

(87) Numéro de publication internationale :
**WO 93/02877 (18.02.93 93/05)**

(54) **PROCEDE D'EXPLOITATION DES MESURES DE PRESSION ET DE TEMPERATURE DANS UN SYSTEME DE SURVEILLANCE DE PNEUMATIOUES.**

(30) Priorité: **08.08.91 FR 9110225**

(43) Date de publication de la demande:
**25.05.94 Bulletin 94/21**

(45) Mention de la délivrance du brevet:
**15.03.95 Bulletin 95/11**

(84) Etats contractants désignés:
**DE FR GB IT**

(56) Documents cités:
**EP-A- 0 315 885**

(73) Titulaire: **COMPAGNIE GENERALE DES ETA-BLISSEMENTS MICHELIN-MICHELIN & CIE
12, cours Sablon
F-63040 Clermont-Ferrand Cédex (FR)**

(72) Inventeur: **HEBERT, Jacques
10, villa Pasteur
F-92210 S.-Cloud (FR)**

(74) Mandataire: **Bauvir, Jacques
Michelin & Cie,
Service SRK Brevets
23, Place des Carmes
F-63040 Clermont-Ferrand Cédex (FR)**

Rank Xerox (UK) Business Services
(3.10/3.09/3.3.3)

EP 0 597 942 B1

**Description**

La présente invention se rapporte aux systèmes de surveillance des pneumatiques. Plus particulièrement, elle concerne l'exploitation des mesures faites sur les pneumatiques en vue de donner une ou plusieurs alarmes.

Le but des sytèmes de surveillance des pneumatiques est d'alerter le conducteur de toute anomalie pouvant survenir à ces ou à l'un de ces pneumatiques, et ceci aussitôt que possible et de façon aussi fiable que possible. Parmi les paramètres de fonctionnement du pneumatique que l'on souhaite observer, il y a bien sûr la quantité d'air de gonflage du pneumatique. Celle-ci peut diminuer soit suite à une crevaison, soit de par le dégonflement naturel par diffusion au travers du pneumatique lui-même, qui n'est jamais infiniment étanche à l'air. Or la mesure directe de la quantité d'air enfermé dans le pneumatique n'étant pas possible, on y accède par les mesures de pression et de température. Le brevet US 4 703 650 décrit un dispositif de codage utilisable pour la transmission de la pression et de la température d'un pneumatique depuis la roue vers le véhicule.

Pour livrer au conducteur une information fiable et utile, il est souhaitable de ne pas se contenter d'afficher les valeurs décodées des mesures de pression et de température. La consultation permanente de ces indications risque d'être fastidieuse et/ou leur interpétation problématique. Ces mesures sont influencées par des perturbations diverses comme la chaleur dégagée par les freins ou au contraire le refroidissement provoqué par la jante, comme les transferts de charge qui provoquent de légères vartiations du volume des pneumatiques, ou comme l'échauffement du pneumatique dû à ses pertes hystérétiques.

C'est pourquoi on a proposé, dans le brevet US 4 893 110 un procédé d'exploitation des mesures basé sur des comparaisons entre deux ou plus de deux pneumatiques qui vise à pouvoir donner une alarme en cas de défaillance d'un pneumatique sans adopter des seuils d'alerte s'écartant trop de la précision atteinte par le dispositif de codage/décodage.

Ce traitement, quoique fort utile, ne permet pas de se rendre compte d'une perte de pression affectant quasi également tous les pneumatiques, ce qui est le plus souvent le cas pour le dégonflement naturel des pneumatiques. Aussi il est souhaitable d'effectuer, en outre, un traitement des mesures disponibles spécifique pour l'observation du dégonflement naturel.

C'est pourquoi il est proposé un procédé d'exploitation des signaux dans un système de surveillance des pneumatiques d'un véhicule, ledit système effectuant une mesure de la pression dans chaque pneumatique et calculant à partir de la mesure de la pression un estimateur de la masse d'air contenue dans chaque pneumatique, caractérisé en ce que :
- on calcule la moyenne desdits estimateurs basées sur les mesures relevées sensiblement au même moment pour plusieurs pneumatiques assurant la liaison du véhicule avec le sol,
- on stocke en mémoire non volatile lesdites moyennes calculées après chaque acquisition de mesure,
- on relève le maximum desdites moyennes sur un nombre prédéterminé de moyennes,
- on active une alarme si ledit maximum est inférieur à une valeur considérée comme minimale.

Il s'agit donc d'établir une moyenne entre plusieurs pneumatiques et de surveiller la dérive de cette moyenne. On atteint le maximum de précision après un arrêt du véhicule : on va donc effectuer cette surveillance à chaque démarrage. Puisque le dégonflement naturel des pneumatiques est un phénomène lent, il suffit de le contrôler de temps en temps pour en avoir une surveillance suffisante.

De préférence, pour estimer la masse d'air contenue dans chaque pneumatique, une mesure de la température est effectuée par le système, sensiblement au même moment que la mesure de la pression pour chaque pneumatique, et on base l'estimation sur les deux mesures.

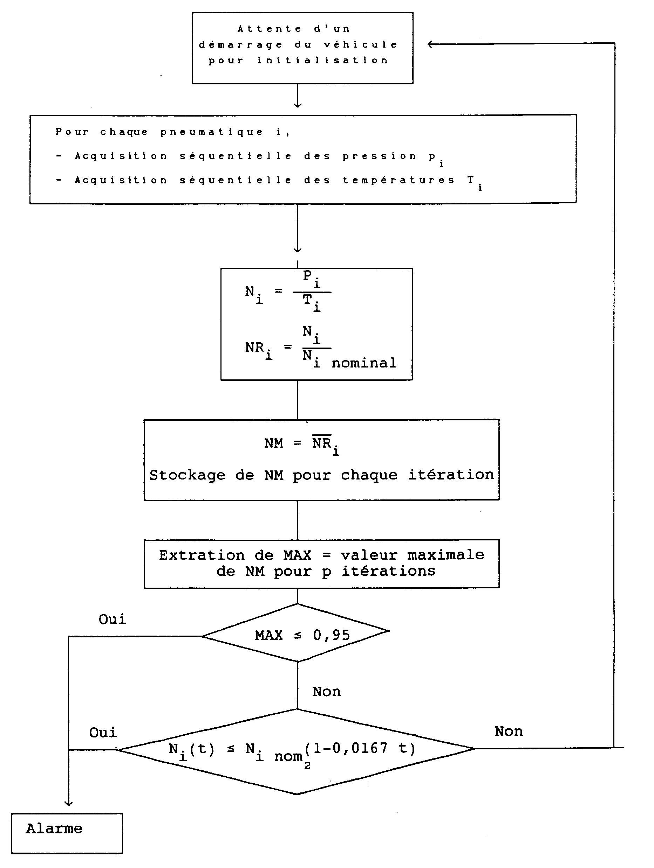

La suite de la description permet, avec l'illustration sous forme d'organigramme jointe (figure 1), de bien comprendre une mise en oeuvre de l'invention.

L'étude expérimentale a montré qu'une surveillance basée sur une moyenne des états de gonflage pour tous les pneumatiques permettait de bien suivre le phénomène de dégonflement naturel. En outre, il est préférable de procéder à une vérification à froid plutôt qu'à chaud. Dès lors, on ajoute une exigence supplémentaire qui vise à ne procéder au contrôle de sous gonflage que à froid. On peut par exemple détecter la mise sous tension à chaque démarrage. Le cumul de ces diverses exigences conduira à diminuer très fortement le nombre de surveillances spécifiques du dégonflement, tout en les rendant de plus en plus fiables.

A partir de chaque acquisition des mesures de pression $P_i$ et de température $T_i$ pour chacun des i pneumatiques, on calcule l'estimateur de la masse d'air de préférence par le rapport de la pression absolue divisée par la température absolue :

2

$$N_i = \frac{P_i}{T_i}$$

et on l'exprime en pourcentage par rapport à la quantité d'air nominale pour chacun des i pneumatiques :

$$NR_i = \frac{N_i}{N_{i\ nom}}$$

Ensuite on calcule la valeur moyenne de $NR_i$, ce qui, pour un véhicule à 4 roues, vaut

$$NM = \overline{NR_i} = \frac{NR_1 + NR_2 + NR_3 + NR_4}{4}$$

et on stocke la valeur NM pour chaque itération. On extrait la valeur maximale de NM pour les p dernières itérations, par exemple les 10 dernières et on active une alarme si il y a eu une perte de la qualité d'air de gonflage d'au moins 5 %.

L'invention propose également de comparer la pression résiduelle ou quantité d'air résiduelle telle que mesurée à chaque démarrage, à l'état théorique pour chaque pneumatique que l'on obtient par calcul en fonction des données suivantes :

.   $N_{i\ nom}$ correspondant à la quantité d'air introduite dans le pneumatique le jour du dernier gonflage ou ajustement de pression effectué,

.   temps t écoulé depuis ce dernier gonflage, exprimé en mois,

.   taux de dégonflement naturel considéré comme normal, à savoir par exemple 1,67 % par mois par rapport à la quantité d'air nominale, cette valeur incluant les tolérances sur la mesure.

La valeur considérée çomme minimale est ici obtenue par calculs, au lieu d'être fixée à un seuil absolu. On compare, pour chaque pneumatique i, $N_i$ à $N_{i\ nom}(1-0,0167\ t)$ où t est exprimé en mois, et on donne une alarme si $N_i$ est plus petit que la valeur minimale calculée, diminuée d'un seuil prédéterminé, qui dans ce cas doit être choisi relativement faible, par exemple 2 %. Il est possible ainsi de détecter une étanchéité insuffisante du pneumatique avant même que celui-ci ait atteint une pression considérée comme insuffisante. Cela permet une inspection et un entretien préventif, puisque la surveillance de pression roue par roue prend pour seuil une valeur correspondant à 88 % de la pression nominale ou même moins, et la surveillance du dégonflement naturel prend pour seuil une valeur correspondant à 95 % de la valeur nominale.

En conclusion, la présente invention propose d'effectuer de façon automatique un contrôle du dégonflement naturel des pneumatiques par l'exploitation de certaines mesures seulement, considérées comme relevées avec une plus grande fiabilité, et le cas échéant, de vérifier si le résultat obtenu peut être considéré comme correspondant à un taux de dégonflement naturel.

Un système de surveillance peut très avantageusement incorporer plusieurs causes d'alarmes : les pertes naturelles, comme proposé ici, le déséquilibre de gonflage par exemple sur un essieu comme proposé dans le brevet US 4 893 110, et une surveillance roue par roue par rapport à un seuil critique. Un tel système surveillant plusieurs critères améliore largement la sécurité globale.

## Revendications

1.   Procédé d'exploitation des signaux dans un système de surveillance des pneumatiques d'un véhicule, ledit système effectuant une mesure de la pression dans chaque pneumatique et calculant à partir de la mesure de la pression, un estimateur de la masse d'air contenue dans chaque pneumatique, caractérisé en ce que :

-   on calcule la moyenne desdits estimateurs basées sur les mesures relevées sensiblement au même moment pour plusieurs pneumatiques assurant la liaison du véhicule avec le sol,

- on stocke en mémoire non volatile lesdites moyennes calculées après chaque acquisition de mesure,
- on relève le maximum desdites moyennes sur un nombre prédéterminé de moyennes,- on active une alarme si ledit maximum est inférieur à une valeur considérée comme minimale.

2. Procédé selon la revendication 1, caractérisé en ce que le système effectue une mesure de la température relevée sensiblement au même moment que la pression pour chaque pneumatique.

3. Procédé selon la revendication 2, caractérisé en ce que l'estimateur de la masse d'air est constitué par le rapport de la pression absolue divisée par la température absolue.

4. Procède selon la revendication 3, caractérisé en ce que l'estimateur de la masse d'air est exprimé en pourcentage par rapport à la masse nominale d'air pour le pneumatique considéré.

5. Procédé selon l'une des revendications 1 à 4, caractérisé en ce qu'il est exécuté au moment de chaque démarrage du véhicule.

6. Procédé selon l'une des revendications 1 à 5, caractérisé en ce que ladite valeur considérée comme minimale est établie en fonction de la quantité d'air introduite le jour du dernier gonflage, et en fonction du temps écoulé depuis le dernier gonflage, et en fonction du taux de dégonflement naturel considéré comme normal.

**Claims**

1. A process of using signals in a tyre monitoring system of a vehicle, said system measuring the pressure in each tyre and calculating an estimator of the mass of air contained in each tyre from the measurement of the pressure, characterised in that:
   - the average of the said estimators is calculated based on the measurements recorded substantially at the same time for several tyres linking the vehicle to the ground,
   - said averages calculated after each measurement acquisition are stored in non-volatile memory,
   - the maximum of said averages is recorded for a predetermined number of averages,
   - an alarm is activated if said maximum is less than a value considered as the minimum.

2. A process according to Claim 1, characterised in that the system effects a measurement of the temperature recorded substantially at the same moment as the pressure for each tyre.

3. A process according to Claim 2, characterised in that the estimator of the mass of air is formed by the ratio of the absolute pressure divided by the absolute temperature.

4. A process according to Claim 3, characterised in that the estimator of the mass of air is expressed in a percentage relative to the nominal volume of air for the tyre in question.

5. A process according to one of Claims 1 to 4, characterised in that it is effected at the moment of each start-up of the vehicle.

6. A process according to one of Claims 1 to 5, characterised in that said value considered as minimum is calculated as a function of the quantity of air introduced on the day of the most recent inflation, and as a function of the time elapsed since the most recent inflation, and as a function of the rate of natural deflation considered to be normal.

**Patentansprüche**

1. Verfahren zur Auswertung von Signalen in einem Überwachungssystem für Luftreifen eines Fahrzeugs, welches System eine Druckmessung in jedem Luftreifen durchführt und anhand der Druckmessung eine Schätzfunktion für die in jedem Luftreifen enthaltene Luftmasse berechnet, dadurch gekennzeichnet, daß:
   - der Mittelwert der Schätzfunktionen auf Grundlage der im wesentlichen gleichzeitig für mehrere, die Verbindung des Fahrzeugs mit dem Boden sicherstellende Reifen aufgenom- menen Messungen berechnet wird,

- die berechneten Mittelwerte nach jeder Aufnahme einer Messung in einem nichtflüchtigen Speicher gespeichert werden,
- das Maximum der Mittelwerte über eine vorgegebene Anzahl von Mittelwerten bestimmt wird,
- ein Alarm ausgelöst wird, wenn das Maximum kleiner ist als ein als Minimalwert angenommener Wert.

2. Verfahren nach Anspruch 1, dadurch gekennzeichnet, daß das System eine Temperaturmessung durchführt, die im wesentlichen zum gleichen Zeitpunkt wie die Druckmessung für jeden Luftreifen aufgenommen wird.

3. Verfahren nach Anspruch 2, dadurch gekennzeichnet, daß die Schätzfunktion für die Luftmasse gebildet wird durch das Verhältnis von absolutem Druck zu absoluter Temperatur.

4. Verfahren nach Anspruch 3, dadurch gekennzeichnet, daß die Schätzfunktion für die Luftmasse als auf die Nennluftmasse des betrachteten Reifens bezogener Prozentsatz ausgedrückt wird.

5. Verfahren nach einem der Ansprüche 1 bis 4, dadurch gekennzeichnet, daß es bei jedem Anfahren des Fahrzeugs durchgeführt wird.

6. Verfahren nach einem der Ansprüche 1 bis 5, dadurch gekennzeichnet, daß der als Minimalwert angesehene Wert in Abhängigkeit von der am Tag des letzten Füllens eingefüllten Luftmenge, der seit dem letzten Füllen verstrichenen Zeit und dem als normal angesehenen Luftverlustverhältnis bestimmt wird.

```
┌─────────────────────────────┐
│    Attente  d'un            │
│ démarrage du véhicule       │◄──────────┐
│  pour initialisation        │           │
└─────────────────────────────┘           │
              │                            │
              ▼                            │
┌──────────────────────────────────────┐  │
│ Pour chaque pneumatique i,           │  │
│  - Acquisition séquentielle des      │  │
│    pression $p_i$                    │  │
│  - Acquisition séquentielle des      │  │
│    températures $T_i$                │  │
└──────────────────────────────────────┘  │
              │                            │
              ▼                            │
         ┌──────────────────┐             │
         │ $N_i = \dfrac{P_i}{T_i}$       │             │
         │                  │             │
         │ $NR_i = \dfrac{N_i}{N_{i\ nominal}}$ │     │
         └──────────────────┘             │
              │                            │
              ▼                            │
┌──────────────────────────────────────┐  │
│      $NM = \overline{NR_i}$          │  │
│ Stockage de NM pour chaque itération │  │
└──────────────────────────────────────┘  │
              │                            │
              ▼                            │
┌──────────────────────────────────────┐  │
│ Extration de MAX = valeur maximale   │  │
│      de NM pour p itérations         │  │
└──────────────────────────────────────┘  │
              │                            │
              ▼                            │
  Oui    ◄───◇ MAX ≤ 0,95 ◇              │
  │               │                        │
  │              Non                       │
  │               ▼                        │
  Oui ◄── ◇ $N_i(t) \le N_{i\ nom_2}(1-0,0167\ t)$ ◇ ──► Non ──┘
  │
  ▼
┌──────────┐
│ Alarme   │
└──────────┘
```